# FASCICULE DE BREVET EUROPEEN

(11) **EP 0 834 044 B1**
(45) Date de publication et mention de la délivrance du brevet: **28.08.2002**
(21) Numéro de dépôt: 96922935.0
(22) Date de dépôt: 17.06.1996
(51) Int. Cl.: F24C 3/08

(54) **PLAQUE DE CUISSON AU GAZ EN VITROCERAMIQUE ET PROCEDE POUR SA FABRICATION**
GLASKERAMIK-KOCHPLATTE UND VERFAHREN ZU IHRER HERSTELLUNG
GLASS-CERAMIC COOKING PLATE FOR GAS COOKERS, AND METHOD FOR MAKING SAME

(30) Priorité: 19.06.1995 FR 9507296
(43) Date de publication de la demande: 08.04.1998
(73) Titulaire: Keraglass, 77167 Bagneaux-sur-Loing (FR)
(72) Inventeur: FAFET, Gérald, Pascal, F-78420 Carrières-sur-Seine (FR); FREDHOLM, Allan, Mark, F-91540 Mennecy (FR)
(74) Mandataire: Colas, Jean-Pierre
(86) Numéro de dépôt international: FR9600927
(87) Numéro de publication internationale: WO97000407

(56) Documents cités:
- EP-A- 0 210 780
- EP-A- 0 231 529
- EP-A- 0 615 096
- GB-A- 1 593 976
- US-A- 3 592 180
- US-A- 4 835 121
- US-A- 5 259 361

## Description

L'invention concerne une plaque de cuisson au gaz en vitrocéramique, et un procédé pour sa fabrication.

Le marché des plaques de cuisson encastrables ou intégrées à des cuisinières comprend essentiellement trois types de produits : les plaques à flammes de gaz, les plaques électriques en fonte et les plaques vitrocéramiques.

Les plaques de cuisson à flammes de gaz sont constituées d'une plaque, en général en tôle émaillée, de brûleurs émergeant de cette plaque et de supports d'articles de cuisson reposant sur cette plaque.

Des efforts récents ont renouvelé l'aspect de ces plaques de cuisson par le remplacement de la traditionnelle tôle émaillée par des plaques de verre ou de vitrocéramique.

Ainsi US-A-5 259 361 décrit un appareil de cuisson à brûleur à gaz radiant comportant une plaque de cuisson qui peut être en vitrocéramique et qui présente des petites plots pleins en relief destinés à supporter l'ustensile de cuisson.

EP-A-0 615 096 décrit une plaque de cuisson pour un appareil de cuisson à brûleurs à gaz, qui peut être réalisée en verre thermorésistant, en matière plastique thermorésistante, en aluminium ou en acier par des techniques telles que le pressage (pour le verre), le moulage par injection (pour la matière plastique), le moulage par injection (pour l'aluminium) et l'emboutissage profond (pour l'acier). Cette plaque de cuisson comporte des bossages intégrés prévus autour de chaque brûleur à gaz, la zone entourant chaque brûleur formant une partie en creux destinée à collecter les chutes de liquide. Ce document ne donne aucun enseignement permettant de fabriquer en vitrocéramique une plaque de cuisson du genre décrit.

Les plaques électriques en fonte ont permis l'utilisation de l'énergie électrique pour la cuisson, mais, depuis l'avènement des plaques de cuisson vitrocéramiques, sont cantonnées dans le bas de gamme des plaques de cuisson électriques.

Les plaques de cuisson en vitrocéramique occupent une place prépondérante sur le marché des plaques de cuisson et représentent la modernité et le haut de gamme face aux plaques électriques en fonte et aux plaques à flammes de gaz. Les qualités reconnues par les consommateurs sont la facilité de nettoyage due à la continuité de la plaque de vitrocéramique ainsi que l'aspect moderne de ces surfaces, de couleur noire dans la quasi-totalité des cas. Les plaques de cuisson vitrocéramiques utilisent plusieurs systèmes de chauffage. Le chauffage par foyers électriques, radiants ou halogènes est le plus répandu mais nécessite des puissances de plusieurs kilowatts qui ne sont pas toujours disponibles sur les réseaux électriques de plusieurs pays dont l'Italie et dans une moindre mesure l'Espagne. Pour ces pays, des systèmes de chauffage au gaz sans flamme apparente et placés sous la plaque de vitrocéramique ont été développés pour remplacer les foyers électriques.

Le chauffage des articles de cuisson par des foyers au gaz sans flamme ou par des foyers électriques radiants ou halogènes implique, du fait que le transfert de chaleur auxdits articles se fait à travers la plaque de vitrocéramique, le chauffage préalable de celle-ci. Des systèmes de chauffage par induction sous plaque en vitrocéramique permettent de chauffer directement l'ustensile de cuisson sans chauffer la plaque en vitrocéramique, mais ils nécessitent des articles de cuisson spécifiques (conducteurs et de préférence magnétiques).

L'utilisation des vitrocéramiques d'aluminosilicate de lithium a permis le développement des plaques de cuisson vitrocéramiques grâce à leur très faible coefficient de dilatation qui leur permet de résister à des chocs thermiques de plusieurs centaines de degré.

Rappelons qu'une vitrocéramique est à l'origine un verre, dit verre précurseur, dont la composition chimique spécifique permet de provoquer par des traitements thermiques adaptés, dits de céramisation, une cristallisation contrôlée. Cette structure spécifique en partie cristallisée confère à la vitrocéramique des propriétés uniques. Au cours des traitements de céramisation les phases suivantes sont généralement constatées : une phase de nucléation au cours de laquelle coalescent les noyaux sur lesquels les cristaux se formeront, et une phase de cristallisation au cours de laquelle les cristaux se forment, puis croissent. La viscosité du verre diminue lors du chauffage initial, présente un minimum juste avant cristallisation puis augmente sous l'effet de la cristallisation. La nucléation a lieu vers 700°C. La céramisation en matériau transparent s'effectue vers 900°C alors que celle en matériau opaque s'effectue vers 1100°C, l'opalisation commençant vers 1000°C.

Divers matériaux appartenant à la famille des vitrocéramiques d'aluminosilicates de lithium sont utilisés en tant que support des articles de cuisson : des vitrocéramiques de bêta-quartz d'aspect noir, faiblement transparentes dans le visible et plus ou moins transparentes dans l'infra-rouge, et des vitrocéramiques de bêta-spodumène d'aspect blanc, opaques dans le visible et faiblement transparentes dans l'infra-rouge. De par leur propriétés optiques, l'utilisation des vitrocéramiques de bêta-spodumène est uniquement associée au chauffage à induction mais de plus en plus de plaques à induction utilisent des plaques de vitrocéramique noire pour . des raisons esthétiques. L'épaisseur des plaques vitrocéramiques est généralement de 4 mm environ sauf pour certaines applications professionnelles pour lesquelles l'épaisseur peut être augmentée à 5 ou 6 mm. D'autres couleurs ou aspects optiques peuvent être réalisés à partir de vitrocéramiques de compositions différentes ou ayant subi divers traitements.

Afin de combiner les avantages respectifs des plaques de cuisson à flammes de gaz et des plaques de cuisson vitrocéramiques au gaz, il serait souhaitable de pouvoir fabriquer des plaques vitrocéramiques formées dont les formes intégreraient la fonction de support des articles de cuisson et la fonction de passage du brûleur. La disponibilité de telles plaques permettrait de remédier aux inconvénients respectifs des plaques de cuisson à flammes de gaz et des plaques de cuisson vitrocéramiques au gaz actuellement connues qui sont liés au fait que l'on ne dispose pas à ce jour de plaques vitrocéramiques formées.

Ainsi, à ce jour, seule la cuisson avec des flammes de gaz permet des variations de puissance permettant de chauffer très rapidement mais aussi d'arrêter très rapidement le chauffage. En effet les foyers au gaz sans flamme placée sous une plaque en vitrocéramique présentent les inconvénients d'une inertie de chauffage et surtout d'un lent refroidissement, par suite de la nécessité de chauffer la plaque en vitrocéramique. Des mesures ont montré qu'après utilisation, la température d'une plaque revient à 50°C après environ 40 minutes. Ce manque de souplesse peut gêner des utilisateurs habitués à la souplesse de chauffage des flammes de gaz.

Le principal inconvénient des plaques à flammes de gaz est leur aspect vieillot lié à l'utilisation de tôle émaillée qui les fait apparaître comme des produits de bas de gamme.

Autant le nettoyage des plaques de cuisson vitrocéramiques est un atout largement cité en tête par une grande majorité des consommateurs, autant il est fastidieux de démonter les grilles des plaques de cuisson à flammes de gaz pour les nettoyer ainsi que pour nettoyer la plaque en tôle émaillée.

On a donc besoin de plaques de cuisson au gaz améliorées.

L'invention vise à satisfaire ce besoin en fournissant des plaques vitrocéramiques formées intégrant la fonction de support des ustensiles de cuisson et permettant de combiner les avantages respectifs des plaques de cuisson à flammes de gaz (rapidité du chauffage et coupure instantanée du chauffage des articles de cuisson) et des plaques de cuisson vitrocéramique (facilité de nettoyage, esthétique) tout en supprimant les grilles de support des articles de cuisson sur les plaques à gaz traditionnelles.

L'invention concerne une méthode pour produire une telle plaque par les étapes de la partie caractérisante de la revendication 1.

L'invention concerne aussi une plaque de cuisson en vitrocéramique pour appareils de cuisson au gaz, caractérisée en ce qu'elle comporte au moins une ouverture destinée à recevoir un brûleur à gaz et plusieurs bossages de même hauteur répartis autour de cette ouverture et destinés à supporter un ustensile de cuisson à chauffer par ledit brûleur, lesdits bossages étant partie intégrante de la plaque elle-même, caractérisée en ce que la plaque de cuisson est en vitrocéramique et en ce que lesdits bossages sont creux et présentent des rayons de courbure de l'ordre du centimètre.

Avantageusement ladite ouverture se situe à un niveau plus élevé que la partie de la plaque contiguë à elle.

Selon un mode de réalisation préféré, la plaque comporte, en outre, une zone en dépression par rapport à ladite ouverture et aux bords de la plaque, prévue autour de ladite ouverture et destinée à recueillir les débordements liquides accidentels en cours de cuisson.

La hauteur des bossages doit être suffisante pour que les fonds des ustensiles de cuisson (casseroles, poêles, cocottes, etc...) posés sur ces bossages se trouvent à environ 1 à 3 cm au-dessus du sommet du brûleur mis en place dans l'ouverture correspondante.

De préférence, les sommets des bossages sont plans et horizontaux.

Une plaque de cuisson selon l'invention peut comporter une seule ouverture à brûleur, mais peut aussi en comporter deux ou plusieurs, selon le nombre de feux désirés par plaque.

L'invention concerne aussi les appareils de cuisson au gaz (par exemple cuisinières et plaques de cuisson encastrables) comportant au moins une plaque selon l'invention.

L'invention englobe aussi bien des appareils de cuisson comportant une seule plaque à feu unique ou à feux multiples (configuration classique), que des appareils comportant deux ou plusieurs plaques, chacune de ces plaques étant à feu unique ou à feux multiples. Par le terme "feu", on entend un emplacement de cuisson.

L'invention concerne également des appareils de cuisson mixtes dont la ou les plaque(s) de cuisson comporteraient à la fois des feux à gaz et des feux radiants, halogènes ou à induction.

Est particulièrement avantageux un appareil de cuisson comportant plusieurs plaques à feu unique amovibles, ce qui permet de les nettoyer facilement, par exemple dans un lave-vaisselle ou dans un four à pyrolyse, du fait de leur taille unitaire réduite, par rapport à une plaque à trois ou quatre feux de dimensions forcément beaucoup plus grandes.

Les plaques de cuisson en vitrocéramique ne peuvent pas être fabriquées directement à partir d'une plaque plane en vitrocéramique du fait que pour former les bossages de la plaque de cuisson, il faudrait pouvoir courber le plaque en vitrocéramique selon de petits rayons de courbure, typiquement de l'ordre du centimètre, ce que l'on ne sait pas faire à ce jour.

On sait bien déformer des plaques de vitrocéramiques par affaissement à haute température. Cependant, l'évolution de la viscosité des vitrocéramiques d'aluminosilicate de lithium au cours du cycle de céramisation ne permet de réaliser par affaissement un formage des plaques de vitrocéramique qu'avec des rayons de courbure de grande dimension, typiquement supérieurs à 10 cm. La réalisation de rayons de courbures nettement plus petits sur des plaques en vitrocéramique, par exemple de l'ordre du centimètre, n'est pas possible par ce procédé d'affaissement, la viscosité minimale atteinte juste avant céramisation étant trop élevée. Ce procédé ne convient donc pas pour produire une plaque de cuisson conforme à l'invention.

Un procédé connu, permettant de réaliser des pièces en verre possédant des bossages profonds, consiste, à partir de feuilles de verre découpées aux dimensions adéquates, à réchauffer ces feuilles au-delà de la température de ramollissement du verre, puis à les mettre en forme, par pressage et/ou par aspiration.

Ce procédé ne peut cependant s'appliquer à des pièces en vitrocéramique de forme complexe, car la phase de réchauffage conduirait à une céramisation non contrôlée des pièces et donc à au moins l'un des inconvénients suivants :
- mise en forme impossible ou incomplète car céramisation précoce augmentant considérablement la viscosité de la pièce ;
- casse des pièces suite à la formation de zones à degrés de céramisation différents.

Un autre procédé envisageable serait de réaliser ces pièces par pressage d'une goutte de verre (appelée paraison) dans un ensemble d'outillage ayant une cavité qui définit les contours extérieurs de la pièce.

Une telle opération n'est pas aisée étant donné :
- la déformation extrêmement importante que doit subir la goutte de verre au cours de la mise en forme, ceci d'autant plus que le produit recherché est mince ;
- le risque d'emprisonner de l'air dans les parties complexes de la cavité de l'outillage et donc de générer des défauts de formage ;
- le contact de la paraison avec le moule avant pressage crée des marques nommées frisures, préjudiciables à l'aspect esthétique des pièces.

Les verres précurseurs de vitrocéramiques sont caractérisés, à l'état vitreux, par un palier de travail extrêmement court. Cela signifie que le temps, pendant lequel le verre reste pâteux et peut donc être mis en forme dans une opération de formage, est extrêmement court.

Cette caractéristique ne permet donc pas d'obtenir le type de pièce souhaité par pressage d'une goutte de verre précurseur, sauf à envisager des pièces de forte épaisseur (6 à 8 mm), d'un poids rédhibitoire.

L'invention vise donc aussi à fournir un procédé qui permette la production des plaques en vitrocéramique avec bossages creux.

Le procédé de la présente invention ne présente aucun des inconvénients ci-dessus. Il permet de plus une production économique, car il autorise des cadences de production élevées avec un équipement relativement simple.

L'invention concerne donc aussi un procédé de production d'une plaque de cuisson en vitrocéramique pour appareils de cuisson à gaz, qui comporte au moins un emplacement de cuisson ayant une ouverture destinée à recevoir un brûleur à gaz et plusieurs bossages creux de même hauteur répartis autour de cette ouverture et destinés à supporter un ustensile de cuisson à chauffer par ledit brûleur, lesdits bossages étant partie intégrante de la plaque elle-même, caractérisé en ce qu'il comprend les étapes suivantes :
I) former une feuille de verre à l'état pâteux, de largeur supérieure à la largeur de la plaque de cuisson à former et d'une viscosité de 1000 à 50000 Pa.s, à partir d'une masse de verre fondu précurseur de vitrocéramique, par laminage dudit verre fondu entre des rouleaux ;
II) délivrer ladite feuille de verre pâteux sortant des rouleaux à la surface de moulage d'un moule muni de moyens d'aspiration, de manière qu'elle recouvre ladite surface de moulage, cette surface de moulage comportant l'empreinte d'une pluralité de bossages ;
III) plaquer la feuille contre la surface de moulage du moule en aspirant ladite feuille avec lesdits moyens d'aspiration ;
IV) rogner et/ou couper les parties de la feuille dépassant de la surface de moulage du moule de manière à obtenir une plaque de verre précurseur moulée ; et
V) soumettre la plaque de verre précurseur moulée à un traitement thermique de céramisation pour la convertir en une plaque en vitrocéramique.

Outre les étapes précitées, le procédé de l'invention peut comporter diverses étapes optionnelles ainsi que cela ressortira de la description ci-après, faite en se référant aux dessins annexés.

Sur les dessins :
- la figure 1 est une vue en plan d'une plaque de cuisson à feu unique selon l'invention ;
- la figure 2 est une vue en coupe transversale selon la ligne II-II de la figure 1 ;
- la figure 3 est une vue en plan d'une autre plaque de cuisson à feu unique selon l'invention ; et
- la figure 4 est une vue en coupe transversale selon la ligne IV-IV de la figure 3.
- la figure 5 est une vue en plan d'une plaque de cuisson à feux multiples selon l'invention.

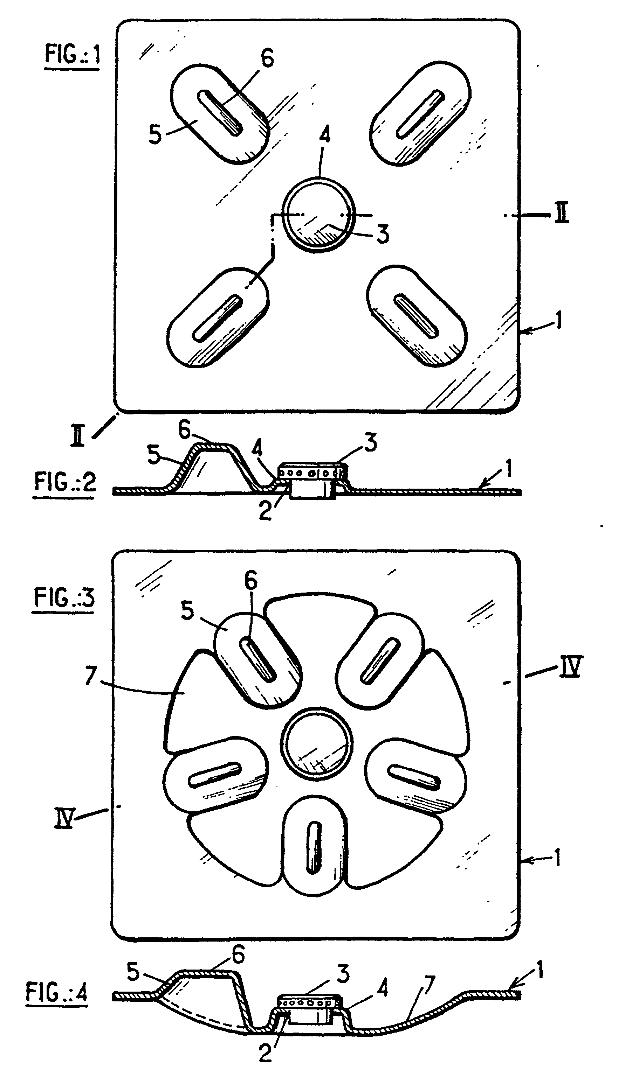

Sur les figures 1 et 2 est représentée une plaque de cuisson en vitrocéramique selon l'invention.

Cette plaque, désignée par la référence générale 1, comporte une ouverture circulaire 2, destinée à recevoir un brûleur à gaz 3 de type classique et située à un niveau légèrement supérieur à celui du reste de la plaque, un col 4 faisant transition entre l'ouverture et le reste de la plaque pour réduire le risque qu'un liquide accidentellement répandu sur la plaque ne s'écoule entre le bord de l'ouverture et le brûleur. La plaque comporte également quatre bossages 5 venus de moulage, répartis autour de l'ouverture et destinés à supporter l'ustensile de cuisson dont le contenu est à chauffer par le brûleur logé dans l'ouverture 2. Chacun de ces bossages a une hauteur d'environ 25 mm et présente à son sommet une surface plate 6.

Les figures 3 et 4 représentent une version améliorée de la plaque des figures 1 et 2. Selon cette variante une dépression 7 présentant en plan la forme générale d'un trèfle à cinq feuilles est formée dans la plaque, autour de l'ouverture 2 et entre les bossages 5 prévus au nombre de cinq cette fois. Cette dépression a pour fonction de recueillir tout liquide provenant d'un débordement ou renversement accidentel afin d'éviter qu'il ne s'écoule entre le bord de l'ouverture et le brûleur.

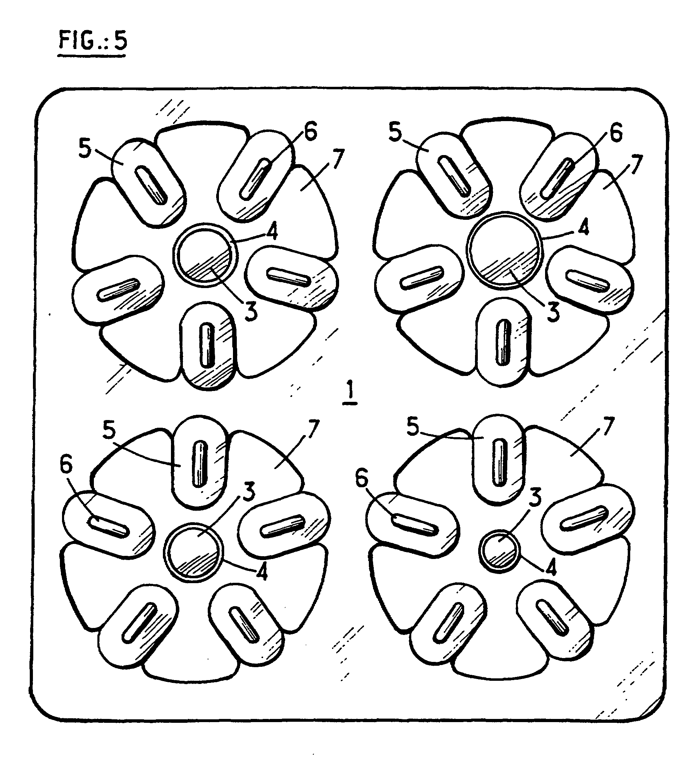

Enfin, la figure 5 montre une plaque de cuisson à quatre feux selon l'invention, les feux ayant une configuration semblable à celle montrée sur les figures 3 et 4, si ce n'est qu'ils présentent chacun une ouverture 2 de diamètre variable de façon à accueillir des brûleurs de puissance différente.

Les plaques des figures 1-5 peuvent être fabriquées comme suit :

Selon le présent procédé, on commence par former une feuille de verre précurseur de vitrocéramique de largeur supérieure à la largeur de la pièce à former, à l'état pâteux, d'une viscosité comprise entre 1000 et 50000 Pa.s, de préférence entre 2000 et 25000 Pa.s.

Une telle feuille peut être obtenue par laminage entre deux rouleaux d'une manière continue ou discontinue.

Selon le mode continu, un système de délivrance de verre liquide est placé à proximité des deux cylindres. Son extrémité comporte généralement une fente à travers laquelle le verre s'écoule et arrive entre deux rouleaux entraînés en rotation. Un tel dispositif est généralement vertical, ce qui permet d'obtenir une épaisseur de verre délivré faible (inférieure à 60 mm, et de préférence inférieure à 40 mm), et donc un angle de mouillage des rouleaux réduit afin de limiter le refroidissement du verre, tout en permettant d'assurer le passage d'un débit de verre élevé.

En variante, on peut opérer en discontinu. Dans une telle variante les rouleaux sont périodiquement alimentés en paraisons de verre, la longueur de la paraison étant sensiblement égale à la largeur de la feuille souhaitée. Les paraisons peuvent être formées par un système de délivrance classique bien connu, muni de ciseaux. Les paraisons peuvent être distribuées directement sur les rouleaux, ou par l'intermédiaire d'un guide à paraisons.

Dans les deux cas, le verre amené aux rouleaux aura une viscosité peu élevée, inférieure à 1000 Pa.s, de préférence inférieure à 500 Pa.s.

Les rouleaux peuvent avoir un diamètre extérieur compris entre 60 et 140 mm et seront en général forés pour permettre l'incorporation d'un système de refroidissement. Une variété de matériaux constitutifs peut être envisagée, parmi lesquels les aciers à outils, les aciers inoxydables, les alliages de nickel et de cobalt, ou l'un de ces matériaux muni d'un revêtement métallique ou céramique. Par ce choix, ainsi que par réglage de la température extérieure des rouleaux, il est possible de faire varier l'état de surface et la viscosité de la feuille de verre.

L'étape suivante du procédé consiste à faire défiler un moule sous les rouleaux et à déposer la feuille de verre sur la surface de moulage de ce moule. La vitesse de défilement du moule est avantageusement supérieure à celle du défilement de la feuille afin d'éviter la formation de plis. Ce moule est muni de moyens permettant de réaliser une aspiration de la feuille de verre, ce qui permet de plaquer la feuille de verre contre la paroi supérieure du moule. La surface de moulage du moule comporte des empreintes correspondant aux bossages de la plaque de cuisson à fabriquer. Ces empreintes peuvent être en relief ou en creux.

L'intérêt de cette méthode de formage est qu'elle nécessite beaucoup moins de déformation du verre que le pressage d'une goutte de verre, pour que celui-ci se conforme à la forme désirée, et que la déformation se produit avant contact avec un outillage, donc sans refroidissement (et donc figeage) violent. Des plaques minces (≤ 4 mm par exemple) et possédant des bossages profonds (≥ 25 mm) peuvent être obtenues facilement.

Les ébauches de plaques ainsi formées n'ont pas encore leur forme finale à ce stade. Dans le cas de la variante continue les ébauches font toujours partie d'un même ruban. Dans les deux cas, elles n'ont pas leurs dimensions extérieures finales, et leur ouverture n'a pas encore été réalisée.

Si l'opération minimale à réaliser à chaud consiste à disjoindre les ébauches de plaques dans la variante continue, le reste des opérations pouvant être réalisé à froid par des techniques de finition bien connues (traçage-rupture, sciage, carottage, meulage), on préfère en général, par souci d'économie, réaliser la forme finale "à chaud", certaines opérations de finition pouvant malgré tout être effectuées à froid.

Les moyens de découpage envisagés sont les suivants.

On peut, à l'aide d'un outil comportant une arête vive, disjoindre la feuille de verre, ou l'amincir fortement de sorte qu'un choc mécanique ou thermique suffise à provoquer sa rupture. De tels outils peuvent être utilisés pour délimiter les contours extérieurs de la pièce, éliminant l'excès de verre dans le cas de la variante discontinue, et disjoignant les pièces de la feuille de verre dans la variante continue. Ils peuvent également être utilisés pour former des trous à l'intérieur de la pièce, par exemple dans sa partie centrale. Ces moyens de découpe peuvent, selon les cas, être mis en oeuvre après, pendant ou après l'aspiration. US-A-3 193 367 et US-A-3 582 454 décrivent des moyens de rognage d'articles en verre formés sous vide et peuvent être consultés pour plus de détail.

Si le formage par aspiration constitue le moyen de formage principal de la plaque, il est toutefois possible d'y adjoindre une opération de pressage. Ce peut être le cas si certaines parties de la plaque doivent posséder sur leur face supérieure des zones dimensionnellement très précises ou comportant des détails particuliers. Ici encore, cette éventuelle opération de pressage sera effectuée de la façon la plus judicieuse possible par rapport aux opérations de découpage et d'aspiration.

Un procédé de formage par pressage d'une feuille de verre à l'état fondu et de rognage de la feuille moulée obtenue est décrit dans US-A-4 361 429, auquel on pourra se reporter pour plus de détails. Egalement des dispositifs de formage continu d'une feuille de verre semblables à ceux décrits dans US-A-3 114 620 (dispositif à convoyeur) ou US-A-3 231 356 (dispositif rotatif) pourront être mis en oeuvre.

Après l'opération de découpe, les plaques sont déchargées du moule.

Une opération de rebrûlage des arêtes tranchées par des méthodes classiques de polissage à la flamme peut alors être effectuée avant convoyage vers une installation de recuisson ou directement vers le traitement thermique de céramisation.

Après recuisson, les plaques avec bossages peuvent être décorées avec les émaux habituellement déposés par sérigraphie ou par décalcomanie sur les plaques de cuisson en vitrocéramique. Etant donné les bossages ces émaux seront de préférence déposés par décalcomanie.

Après avoir réalisé les bossages par les opérations de formage décrites ci-dessus, et éventuellement le dépôt des émaux, on peut céramiser directement la plaque en verre précurseur avec bossages en la soumettant à un traitement de céramisation comprenant typiquement les étapes suivantes :
a) élévation de la température de la plaque de verre à raison de 10 à 100°C/minute jusqu'au domaine de nucléation du verre,
b) traversée de l'intervalle de nucléation du verre en un temps compris généralement entre 10 minutes et une heure;
c) élévation de la température jusqu'à la température de céramisation en un temps compris généralement entre 10 minutes et une heure ;
d) maintien à la température de céramisation pendant généralement 15 minutes à 1 heure, et
e) refroidissement rapide de la plaque en vitrocéramique jusqu'à la température ambiante.

En variante on peut recuire, puis refroidir de façon classique la plaque en verre précurseur si on préfère effectuer la céramisation ultérieurement.

Une des caractéristiques avantageuses du procédé de l'invention est qu'il est possible d'obtenir un état de surface supérieur de la pièce, proche du poli feu.

Il est également possible, en préparant les rouleaux de façon adéquate, de conférer à cette surface une rugosité contrôlée, ou de réaliser des motifs (damier, frises,...) sur tout ou partie de cette surface, ce qui élargit considérablement la palette des produits possibles.

De même, en creusant à certains endroits la surface extérieure d'au moins un des rouleaux, il est possible de contrôler le profil d'épaisseur de la plaque, pour par exemple rendre intentionnellement plus épaisses certaines zones, ou pour compenser l'amincissement naturel des parties qui seront le plus déformées au cours du moulage.

Les moules peuvent être réalisés de différentes manières :
- en matériaux tels que le bronze, l'acier inoxydable, le graphite munis de passages de vide pour la réalisation d'une dépression. Ces passages peuvent être des perçages de petite dimension, ou être des trous de plus grande dimension dans lesquels un matériau poreux aura été introduit ;
- en matériaux poreux tels que le bronze ou l'acier inoxydable, ou du graphite de faible densité, l'aspiration étant créée à travers la masse du matériau.

Dans tous les cas, ces moules seront munis de moyens permettant d'assurer le contrôle de leur température.

A titre illustratif, on donne ci-après un exemple de réalisation d'une plaque de cuisson de dimensions finies 280 mm x 280 mm x 4 mm suivant l'invention.

Un verre précurseur ayant la composition suivante, en % en poids sur la base des oxydes :

| | |
|---|---|
| SiO₂ | 68,25 |
| Al₂O₃ | 19,2 |
| Li₂O | 3,5 |
| MgO | 1,2 |
| ZnO | 1,6 |
| BaO | 0,8 |
| TiO₂ | 2,6 |
| ZrO₂ | 1,7 |
| As₂O₃ | 0,6 |
| Na₂O + K₂O | 0,35 |
| V₂O₅ | 0,2 |

est fondu et laminé en une feuille continue de 320 mm de large entre deux rouleaux de diamètre extérieur 100 mm et animés d'une vitesse linéaire de 8,5 m/min, la viscosité du verre avant laminage étant d'environ 300 Pa.s et après laminage d'environ 5000 Pa.s. La feuille de verre précurseur est appliquée par aspiration sur les moules d'une machine continue comportant 20 moules montés sur un convoyeur. Dans ce cas la vitesse de défilement des 20 moules placés sur la machine est de 12,5 m/min correspondant à une cadence de 39 pièces par minute pour une tirée de verre de 56 tonnes par jour. La feuille de verre avec bossages d'une longueur légèrement supérieure à 280 mm de long est séparée à chaud par traçage et rupture du ruban de verre puis finie par les techniques habituelles de découpe et de façonnage aux dimensions de 280 mm x 280 mm.

La plaque ainsi formée est ensuite placée sur un support de céramisation en matériau réfractaire et céramisé suivant le traitement de céramisation suivant :
- élévation de température de l'ambiante à 620°C en 30 minutes,
- traversée de l'intervalle de nucléation de 620°C à 760°C en 45 minutes,
- élévation de la température jusqu'à la température de céramisation de 900°C en 45 minutes,
- maintien à la température de céramisation de 900°C pendant 30 minutes, et
- refoidissement de 900°C à l'ambiante en 10 minutes.

Il va de soi que les modes de réalisation décrits ne sont que des exemples et qu'on pourrait les modifier, notamment par substitution d'équivalents techniques, sans sortir pour cela du cadre de l'invention.

## Revendications

1. Procédé de production d'une plaque de cuisson en vitrocéramique pour appareils de cuisson à gaz, qui comporte au moins un emplacement de cuisson ayant une ouverture (2) destinée à recevoir un brûleur à gaz (3) et plusieurs bossages creux (5) de même hauteur répartis autour de cette ouverture et destinés à supporter un ustensile de cuisson à chauffer par ledit brûleur, lesdits bossages étant partie intégrante de la plaque elle-même, **caractérisé en ce qu'**il comprend les étapes suivantes :
I) former une feuille de verre à l'état pâteux, de largeur supérieure à la largeur de la plaque de cuisson à former et d'une viscosité de 1000 à 50000 Pa.s, à partir d'une masse de verre fondu précurseur de vitrocéramique, par laminage dudit verre fondu entre des rouleaux ;
II) délivrer ladite feuille de verre pâteux sortant des rouleaux à la surface de moulage d'un moule muni de moyens d'aspiration, de manière qu'elle recouvre ladite surface de moulage, cette surface de moulage comportant l'empreinte d'une pluralité de bossages ;
III) plaquer la feuille contre la surface de moulage du moule en aspirant ladite feuille avec lesdits moyens d'aspiration ;
IV) rogner et/ou couper les parties de la feuille dépassant de la surface de moulage du moule de manière à obtenir une plaque de verre précurseur moulée ; et
V) soumettre la plaque de verre précurseur moulée à un traitement thermique de céramisation pour la convertir en une plaque en vitrocéramique.

2. Procédé selon la revendication 1, **caractérisé en ce qu'**il comporte, en outre, une opération de pressage de la feuille de verre précurseur.

3. Procédé selon la revendication 1, **caractérisé en ce qu'**au moins l'un des rouleaux de laminage présente une surface rugueuse, à motif ou creusée.

4. Procédé selon la revendication 1, **caractérisé en ce qu'**on fait défiler le moule sous les rouleaux et on dépose la feuille de verre sur la surface de moulage du moule, la vitesse de défilement du moule étant supérieure à celle du défilement de la feuille.

5. Plaque de cuisson produite selon l'une des revendications 1 à 4 pour appareils de cuisson à gaz, qui comporte au moins un emplacement de cuisson ayant une ouverture (2) destinée à recevoir un brûleur à gaz (3) et plusieurs bossages (5) de même hauteur répartis autour de cette ouverture et destinés à supporter un ustensile de cuisson à chauffer par ledit brûleur, lesdits bossages étant partie intégrante de la plaque elle-même, **caractérisée en ce que** la plaque de cuisson est en vitrocéramique et **en ce que** lesdits bossages sont creux et présentent des rayons de courbure de l'ordre du centimètre.

6. Plaque de cuisson selon la revendication 5, **caractérisée en ce qu'**elle comporte une zone (7) en dépression par rapport à ladite ouverture et aux bords de la plaque, prévue autour de ladite ouverture.

7. Plaque de cuisson selon la revendication 5 ou 6, **caractérisée en ce que** l'ouverture (2) se situe à un niveau plus élevé que la partie de la plaque contiguë à elle.

8. Plaque de cuisson selon la revendication 5, **caractérisée en ce que** les sommets des bossages sont plans et horizontaux.

9. Plaque de cuisson selon l'une quelconque des revendications 5 à 8, **caractérisée en ce qu'**elle comporte plusieurs emplacements de cuisson.

10. Plaque de cuisson selon l'une quelconque des revendications 5 à 9, **caractérisée en ce que** la vitrocéramique est du β-quartz.

11. Plaque de cuisson selon l'une quelconque des revendications 5 à 10, **caractérisée en ce qu'**elle présente une surface de rugosité contrôlée.

12. Plaque de cuisson selon l'une quelconque des revendications 5 à 11, **caractérisée en ce qu'**elle présente un motif sur tout ou partie de sa surface.

13. Plaque de cuisson selon l'une quelconque des revendications 5 à 12, **caractérisé en ce que** l'ouverture (2) est délimitée par un col (4).

14. Appareil de cuisson à flammes de gaz, **caractérisé en ce qu'**il comprend au moins une plaque de cuisson produite par un procédé tel que défini à l'une quelconque des revendications 1 à 4 et/ou telle que définie à l'une quelconque des revendications 5 à 13.

15. Appareil de cuisson selon la revendication 14, **caractérisé en ce qu'**il comprend au moins deux plaques de cuisson.

## Patentansprüche

1. Verfahren zur Herstellung einer Keramikglas-Kochplatte für Gas-Kochgeräte, mit wenigstens einer Kochstelle mit einer Öffnung (2) zum Aufnehmen eines Gasbrenners (3) und mehreren hohlen Wölbungen (5) gleicher Höhe, die um die Öffnung verteilt angeordnet sind und dem Stützen eines durch den Brenner zu erhitzenden Kochgeschirrs dienen, wobei die Wölbungen ein integraler Bestandteil der Platte selbst sind, **dadurch gekennzeichnet, daß** es die folgenden Schritte aufweist:
l) Bilden einer Glasscheibe im pastösen Zustand mit einer Breite, die größer als die Breite der zu bildenden Kochplatte ist, und mit einer Viskosität zwischen 1000 und 50000 Pa.s, ausgehend von einer geschmolzenen Glasmasse eines Glaskeramikvorläufers, durch Laminieren des geschmolzenen Glases zwischen Walzen;
II) Ausgeben der von den Walzen kommenden pastösen Glasscheibe auf die Formfläche einer mit Saugeinrichtungen versehenen Form, derart, daß sie die Formfläche bedeckt, wobei die Formfläche die Formen für mehrere Wölbungen aufweist;
III) Anlegen der Scheibe gegen die Formfläche der Form durch Ansaugen der Scheibe mittels der Saugeinrichtungen;
IV) Trimmen und/oder Schneiden der Teile der Scheibe, welche über die Formfläche der Form hinausgehen, um eine geformte Vorläufer-Glasplatte zu erhalten; und
V) Keramisierungswärmebehandeln der geformten Vorläufer-Glasplatte, um diese in eine Glaskeramikplatte umzuwandeln.

2. Verfahren nach Anspruch 1, **dadurch gekennzeichnet, daß** es ferner einen Vorgang des Pressens der Vorläufer-Glasscheibe umfaßt.

3. Verfahren nach Anspruch 1, **dadurch gekennzeichnet, daß** wenigstens eine der Laminierwalzen eine rauhe, eine gemusterte oder eine gerillte Oberfläche aufweist.

4. Verfahren nach Anspruch 1, **dadurch gekennzeichnet, daß** die Form unter den Walzen bewegt wird und die Glasscheibe auf der Formfläche der Form abgelegt wird, wobei die Bewegungsgeschwindigkeit der Form höher als die der Scheibe ist.

5. Kochplatte, hergestellt nach einem der Ansprüche 1 bis 4, für Gas-Kochgeräte, mit wenigstens einer Kochstelle mit einer Öffnung (2) zum Aufnehmen eines Gasbrenners (3) und mehreren Wölbungen (5) gleicher Höhe, die um die Öffnung verteilt angeordnet sind und dem Stützen eines durch den Brenner zu erhitzenden Kochgeschirrs dienen, wobei die Wölbungen ein integraler Bestandteil der Platte selbst sind, **dadurch gekennzeichnet, daß** die Kochplatte aus Glaskeramik besteht und daß die Wölbungen hohl sind und Krümmungsradien in Zentimeter-Größenordnung aufweisen.

6. Kochplatte nach Anspruch 5, **dadurch gekennzeichnet, daß** sie eine um die Öffnung vorgesehene Zone (7) aufweist, die in bezug auf die Öffnung und die Ränder der Platte vertieft ist.

7. Kochplatte nach Anspruch 5 oder 6, **dadurch gekennzeichnet, daß** die Öffnung (2) auf einer höheren Ebene angeordnet ist, als der sich daran anschließende Teil der Platte.

8. Kochplatte nach Anspruch 5, **dadurch gekennzeichnet, daß** die Scheitel der Wölbungen eben und horizontal sind.

9. Kochplatte nach einem der Ansprüche 5 bis 8, **dadurch gekennzeichnet, daß** sie mehrere Kochstellen aufweist.

10. Kochplatte nach einem der Ansprüche 5 bis 9, **dadurch gekennzeichnet, daß** die Glaskeramik aus β-Quarz besteht.

11. Kochplatte nach einem der Ansprüche 5 bis 10, **dadurch gekennzeichnet, daß** sie eine Oberfläche mit kontrollierter Rauheit aufweist.

12. Kochplatte nach einem der Ansprüche 5 bis 11, **dadurch gekennzeichnet, daß** sie auf der gesamten Oberfläche oder in einem Teil derselben ein Muster aufweist.

13. Kochplatte nach einem der Ansprüche 5 bis 12, **dadurch gekennzeichnet, daß** die Öffnung (2) durch einen Bund (4) begrenzt ist.

14. Gas-Kochgerät, **dadurch gekennzeichnet, daß** es mindestens eine Kochplatte, die nach dem Verfahren gemäß einem der Ansprüche 1 bis 4 hergestellt ist, und/oder eine Kochplatte nach einem der Ansprüche 5 bis 13 aufweist.

15. Kochgerät nach Anspruch 14, **dadurch gekennzeichnet, daß** es wenigstens zwei Kochplatten aufweist.

## Claims

1. A process for production of a glass ceramic cooking plate for gas cooking apparatuses, which has at least one cooking site with an opening (2) intended to receive a gas burner (3) and several hollow humps (5) of the same height distributed around this opening which are intended to support a cooking utensil to be heated by said burner, said humps being an integral part of the plate itself, **characterized by** the fact that it includes the following steps:
a) shaping of a sheet of glass in the pasty state, whose width is greater than the width of the cooking plate to be formed and whose viscosity is 1,000-50,000 Pa.s, from a mass of melted precursor glass-ceramic glass by rolling of said melted glass between rollers;
b) delivering said sheet of pasty glass to the molding surface of a mold provided with means of suction in such a way that it covers said molding surface, this molding surface having the impression of a number of humps;
c) laying the sheet against the molding surface of the mold by sucking said sheet with said means of suction;
d) trimming and/or cutting the parts of the sheet protruding from the molding surface of the mold in such a way as to obtain a molded precursor glass plate; and
e) subjecting the molded glass plate to a thermal ceramic processing treatment in order to convert it into a glass-ceramic plate.

2. A process according to Claim 1, **characterized by** the fact that it also includes an operation of pressing the precursor glass sheet.

3. A process according to Claim 1, **characterized by** the fact that at least one of the rollers has a rough surface, a surface with a pattern, or a hollowed surface.

4. A process according to Claim 1, **characterized by** the fact that the mold is run under the rollers and the glass sheet is deposited on the molding surface
of the mold, the running speed of the mold being greater than that of the running of the sheet.

5. A cooking plate produced according to one of the claims 1 to 4, for gas cooking apparatuses, comprising at least one opening (2) intended to receive a gas burner (3) and several humps (5) of the same height distributed around this opening which are intended to support a cooking utensil to be heated by said burner, said humps being an integral part of the plate itself, **characterized by** the fact that the cooking plate is made of glass-ceramic and by the fact that said humps are hollow and present radii of curvature on the order of a centimeter.

6. A cooking plate according to Claim 5, **characterized by** the fact that the plate also has a zone (7) which is depressed with respect to said opening and to the edges of the plate, which is provided around said opening.

7. A cooking plate according to Claim 5 or 6, **characterized by** the fact that said opening (2) is at a higher level than the part of the plate which is contiguous with it.

8. A cooking plate according to Claim 5, **characterized by** the fact that the tops of the humps are flat and horizontal.

9. A cooking plate according to any one of Claims 5-8, **characterized by** the fact that it has several cooking sites.

10. A cooking plate according to any one of Claims 5-9, **characterized by** the fact that it is made of a β-quartz glass-ceramic.

11. A cooking plate according to any one of Claims 5-10, **characterized by** the fact that it has a surface of controlled roughness.

12. A cooking plate according to any one of Claims 5-11, **characterized by** the fact that it has a pattern on its whole surface or on a part thereof.

13. A cooking plate according to any one of Claims 5-12, **characterized by** the fact that the opening (2) is delimited by a neck (4).

14. A gas cooking apparatus, **characterized by** the fact that it has at least one cooking plate produced by a process as defined in any one of Claims 1-4 and/or as defined in any of Claims 5-13.

15. A cooking apparatus according to Claim 14, **characterized by** the fact that it has at least two cooking plates.
